Europäisches Patentamt

European Patent Office

Office européen des brevets

(19)

(11) **EP 1 152 859 B1**

(12)     **FASCICULE DE BREVET EUROPEEN**

(45) Date de publication et mention
de la délivrance du brevet:
**18.09.2002   Bulletin 2002/38**

(21) Numéro de dépôt: **00906429.6**

(22) Date de dépôt: **18.02.2000**

(51) Int Cl.⁷: **B23D 15/14**, B26F 3/04,
F42B 3/00

(86) Numéro de dépôt international:
**PCT/FR00/00413**

(87) Numéro de publication internationale:
**WO 00/048778 (24.08.2000 Gazette 2000/34)**

(54) **DISPOSITIF DE RUPTURE CONTROLEE D'UNE STRUCTURE TRAVAILLANT A LA TRACTION ET EQUIPEMENT EN FAISANT APPLICATION**

VORRICHTUNG ZUM KONTROLIERTEN TRENNEN

CONTROLLED RUPTURE DEVICE FOR A STRUCTURE OPERATING IN TRACTION AND EQUIPMENT USING SAME

(84) Etats contractants désignés:
**AT BE CH CY DE DK ES FI FR GB GR IE IT LI LU MC NL PT SE**

(30) Priorité:   **19.02.1999   FR 9902087**

(43) Date de publication de la demande:
**14.11.2001   Bulletin 2001/46**

(73) Titulaire: **ETIENNE LACROIX - TOUS ARTIFICES SA**
**31600 Muret (FR)**

(72) Inventeurs:
• **VALEMBOIS, Guy**
**F-31700 Blagnac (FR)**

• **GENDRE, Pascal**
**F-31400 Toulouse (FR)**
• **RIFFET, Régis**
**F-31120 Roquettes (FR)**

(74) Mandataire: **Texier, Christian et al**
**Cabinet Régimbeau**
**20, rue de Chazelles**
**75847 Paris cedex 17 (FR)**

(56) Documents cités:
**EP-A- 0 596 400          DE-A- 19 604 410**

EP 1 152 859 B1

**Description**

La présente invention concerne le domaine des dispositifs de rupture contrôlée de structures, notamment de structures travaillant à la traction.

La présente invention peut notamment trouver application dans la rupture contrôlée de liens ou supports assurant le maintien de systèmes, lorsque la libération de ceux-ci est nécessaire.

Plus précisément encore, la présente invention s'applique préférentiellement au domaine des ensembles comprenant des systèmes très sensibles aux contraintes mécaniques. Ainsi, la présente invention peut trouver notamment application dans le domaine aérospatial, par exemple en tant que support conçu pour assurer la libération contrôlée de satellites de petite taille.

De nombreux dispositifs de découpe de liens, câbles ou équivalents ont déjà été proposés.

En particulier, on a déjà proposé de nombreux dispositifs de rupture à base de cordons détonants.

Sur ce point, on pourra se référer par exemple aux documents FR-A-2495991, FR-A-2492336, FR-A-2364746, FR-A-2464778 et EP-A-55165.

Ces dispositifs connus ne donnent cependant pas toujours satisfaction. En particulier, ils génèrent des chocs non négligeables sur les structures découpées et leur environnement. Par ailleurs, ils conduisent à une pollution non acceptable dans certaines applications.

Il a également été proposé de nombreux dispositifs de découpe comprenant un couteau et un élément tel qu'un générateur pyrotechnique adapté pour déplacer le couteau contre la structure à rompre afin de rompre celle-ci par pénétration du couteau dans la matière de la structure et ainsi réduction de l'épaisseur de celle-ci.

Sur ce point, on pourra se référer par exemple aux documents FR-A-2319823, FR-A-2456585, FR-A-2704466 et DE-A-29809585.

Cependant, jusqu'ici les dispositifs de ce type n'ont pas non plus donné toujours satisfaction. Ils conduisent également à des chocs non négligeables et à des risques de pollution suite à l'échappement des gaz issus du générateur pyrotechnique.

On a également proposé des solutions à base de tubes expansibles pyrotechniques chargés d'explosif et placés contre la structure à rompre, à proximité d'une ligne de faiblesse ménagée dans celle-ci.

Sur ce point, on pourra se référer par exemple au document FR-A-2619738.

Cette solution ne donne pas non plus totalement satisfaction. Elle conduit en effet à un niveau de chocs trop élevé pour certaines applications.

Le document DE-19604410 représentant l'art antérieur le plus proche décrit un dispositif comprenant une structure placée en traction entre deux éléments support, et un dispositif de rupture associé à cette structure en traction pour rompre celle-ci à la demande.

Pour tenter d'améliorer la situation, les études actuelles sont orientées sur l'utilisation d'un amortisseur couplé au dispositif de découpe pour limiter le niveau de contraintes mécaniques appliquées aux équipements à libérer.

Le but de la présente invention est de proposer un nouveau dispositif conçu pour permettre la rupture d'une structure formant lien travaillant à la traction et assurant le maintien d'un système, adapté pour limiter les contraintes mécaniques appliquées au système lors de la rupture du lien, notamment pour limiter les vibrations transmises au système.

Un autre but auxiliaire de la présente invention est de proposer un dispositif de rupture de structure évitant toute pollution de l'environnement.

Ces buts sont atteints dans le cadre de la présente invention grâce à un dispositif tel que défini en revendication 1 annexée.

De préférence ce dispositif de rupture contrôlée de fibres, notamment de fibres prétendues, est caractérisé par le fait qu'il comprend deux organes de sollicitation disposés respectivement de part et d'autre des fibres, et des moyens de commande adaptés pour provoquer sur demande un déplacement relatif en rapprochement des organes de sollicitation, ces derniers étant conformés pour imposer, lors de ce déplacement en rapprochement, un rayon de courbure sur les fibres, inférieur au seuil de courbure de celles-ci conduisant à une rupture par flexion.

La Demanderesse a déterminé que ce dispositif qui procède par flexion des fibres et non pas par pénétration dans la matière et affaiblissement d'épaisseur, comme c'est le cas selon l'état de la technique, permet une rupture sans contrainte mécanique notable sur le système maintenu par l'élément découpé.

Selon une autre caractéristique avantageuse de la présente invention, les deux organes de sollicitation sont formés respectivement d'un poinçon et de moyens de retenue. Ces derniers peuvent d'ailleurs faire eux mêmes l'objet de différents modes de réalisation, comme on le précisera par la suite.

Selon une autre caractéristique avantageuse de la présente invention, les moyens de commande sont de type pyrotechnique.

Selon une autre caractéristique avantageuse de la présente invention, l'un des organes de sollicitation est fixe, tandis que l'autre est mobile sous l'actionnement des moyens de commande.

Selon une caractéristique avantageuse de la présente invention les moyens de commande comprennent une charge pyrotechnique apte à générer un gaz haute pression et un organe étanche gonflable relié à la charge pyrotechnique et en contact avec l'un au moins des organes de sollicitation pour déplacer celui-ci lorsque ladite charge est initiée.

Selon une autre caractéristique avantageuse de la présente invention, la structure à rompre formée à base de fibres peut être au moins en partie agglomérée avec un matériau synthétique pour former un matériau composite. De préférence, la structure à rompre est constituée d'une sangle ou équivalent.

La présente invention s'applique notamment à un équipement mettant en oeuvre un tel dispositif de rupture. Comme indiqué précédemment un tel équipement peut par exemple être conformé pour servir de support provisoire à des microsatellites embarqués sur une fusée, pour libérer ceux-ci en un point déterminé et contrôlé de la trajectoire de la fusée.

Selon la présente invention, un tel équipement comprend une structure placée en traction entre deux éléments support, un dispositif de rupture sans choc mécanique associé à cette structure en traction pour rompre celle-ci à la demande, et une poutre travaillant à la compression intercalée entre ces deux éléments support, en parallèle de la structure à rompre. Dans un tel équipement la poutre permet de maintenir la position relative des éléments supports, en combinaison avec la structure en traction. Et il suffit de rompre cette structure en traction pour supprimer le lien existant entre les deux éléments support et libérer ainsi l'un au moins de ceux-ci ainsi que les systèmes tels que des satellites, qui lui sont liés.

Un tel équipement peut notamment trouver application dans le support de microsatellite(s) sur un lanceur. Cependant il n'est pas limité à cette application particulière.

D'autres caractéristiques, buts et avantages de la présente invention apparaîtront à la lecture de la description détaillée qui va suivre et en regard des dessins annexés, donnés à titre d'exemples non limitatifs et sur lesquels :

- la figure 1 représente une vue schématique en perspective éclatée des moyens de base composant un dispositif de rupture conforme à la présente invention,
- la figure 2 représente une vue en coupe transversale des mêmes moyens,
- la figure 3 représente une vue en coupe d'un équipement support à rupture contrôlée comportant un moyen résistant à la compression,
- la figure 4 représente une vue de détail d'un tel équipement, pour la zone référencée IV sur la figure 3, et
- les figures 5 à 16 illustrent des variantes de réalisation du dispositif de rupture conforme à la présente invention.

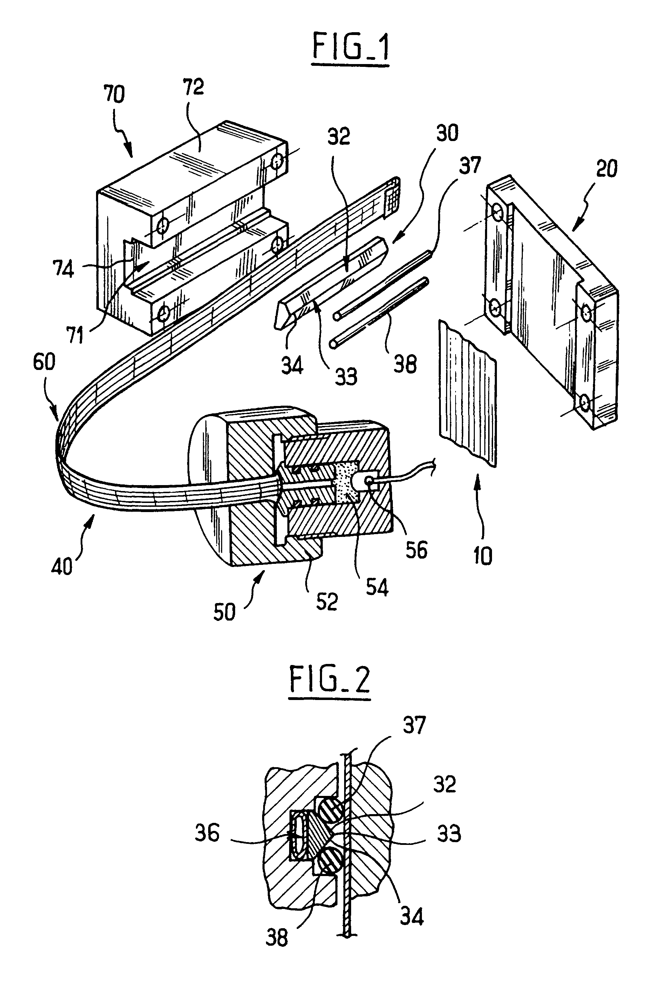

On aperçoit sur les figures 1 et 2 annexées, la structure de base d'un dispositif conforme à la présente invention conçu pour la rupture contrôlée d'une structure formée d'un ruban 10.

Ce ruban 10 peut lui-même faire l'objet de nombreux modes de réalisation.

Dans le cadre de la présente invention, la structure 10 à rompre est formée de préférence à base de fibres, telles que par exemple des fibres de carbone, des fibres de verre, des fibres d'aramide, ou encore tout autre type de fibres, utilisées notamment dans le domaine textile, et susceptibles de supporter des efforts à la traction important compatibles avec les applications visées.

Le cas échéant, ces fibres peuvent être agglomérées dans un matériau synthétique, par exemple polymérisé rigide, pour former une structure à rompre 10 en matériau composite.

Par ailleurs, le cas échéant, dans le cadre de la présente invention, la structure à rompre 10 peut ne pas être homogène sur toute sa longueur. En particulier, on peut prévoir une structure 10 à rompre formée en matériau composite, c'est-à-dire à base de fibres noyées dans un matériau synthétique, à l'exception de sa zone de rupture, placée en regard des moyens de sollicitationi, constituée exclusivement de fibres, ou essentiellement de fibres et d'une petite quantité de matériau synthétique.

Dans le cadre de la présente invention, les fibres sont orientées essentiellement longitudinalement, c'est-à-dire parallèlement à la direction de la traction exercée sur la structure à rompre. Il peut s'agir d'une structure unidirectionnelle de fibres. Cependant, en variante, on peut prévoir des fibres orientées transversalement.

Les structures à rompre peuvent être formées d'un tissé ou d'un non tissé.

De préférence, dans le cadre de la présente invention, les structures 10 à rompre possèdent un module d'élasticité longitudinale supérieur à 20 000MPa.

Par ailleurs, selon une caractéristique non limitative de l'invention, les fibres utilisées possèdent de préférence un diamètre individuel compris entre 0,1 et 25μm, voire entre 0,1 et 10μm.

Selon le mode de réalisation préférentiel de l'invention, les organes de sollicitation précités sont formés de moyens de retenue 20, tels qu'une enclume, et d'un poinçon 30.

Et ces organes de sollicitation sont associés à des moyens 40 adaptés pour assurer un déplacement relatif sur demande entre les moyens de retenue 20 et le poinçon 30. Les moyens 40 sont de préférence de type pyrotechnique.

Comme on l'a indiqué précédemment, les organes de sollicitation, tels que le poinçon 30 et les moyens de retenue 20, sont disposés respectivement de part et d'autre des fibres 10.

Comme indiqué également précédemment, les organes de sollicitation, tels que le poinçon 30 et les moyens de retenue 20, sont conformés pour imposer, lors du déplacement en rapprochement, un rayon de courbure sur les fibres 10, inférieur au seuil de courbure de celles-ci conduisant à une rupture par flexion.

Le poinçon 30 est formé de préférence en un matériau dur, par exemple en acier dur tel que 100C6, avec un module σe supérieur à 2 000MPa. Le poinçon peut faire l'objet de nombreuses configurations.

De préférence, il comprend essentiellement , d'un côté, un dièdre formé de deux faces planes 32, 34 qui se rejoignent au niveau d'une arête 33 plus ou moins arrondie dirigée vers la structure 10 à rompre, et de l'autre côté une face plane 36 perpendiculaire au plan de symétrie du dièdre et conçue pour être sollicitée par les moyens 40. L'arête 33 s'étend perpendiculairement à la direction longitudinale des fibres. La face plane 36 s'étend parallèlement à la direction longitudinale de celles-ci.

Dans le cadre de la présente invention, le dièdre formé par les faces 32, 34 définit de préférence un angle compris entre 30 et 90°, très préférentiellement de l'ordre de 60°.

Le rayon de courbure de l'arête arrondie 33 est de préférence inférieure au rayon minimal acceptable par les fibres 10 avant rupture par flexion.

Dans le cadre de la présente invention, les moyens 40 de commande à déplacement du poinçon 30 sont formés avantageusement par la combinaison d'un générateur pyrotechnique de gaz haute pression 50 et d'un élément étanche gonflable 60.

Le générateur pyrotechnique 50 est placé dans un boîtier rigide 52 éloigné, de préférence, du poinçon 30. Le boîtier rigide 52 peut être formé lui-même par assemblage de plusieurs pièces.

L'éloignement du boîtier 52 de générateur pyrotechnique, par rapport au poinçon 30 a pour but de découpler mécaniquement le générateur pyrotechnique 50 et le poinçon 30 afin d'éviter la transmission de contraintes mécaniques néfastes, notamment de vibrations entre le boîtier 52 et le poinçon 30.

A titre d'exemple non limitatif, on peut prévoir un éloignement entre le générateur pyrotechnique 50 et le poinçon 30 de l'ordre de 100mm au minimum.

La structure du générateur pyrotechnique 50 est connue en elle-même. Le boîtier 52 définit une chambre interne 54 recevant une charge de poudre en liaison avec un initiateur 56.

L'initiateur 56 est de préférence de type électrique. Cependant, le cas échéant, on peut prévoir un initiateur à percussion en raison du découplage mécanique défini entre le boîtier 52 et le poinçon 30.

Il est important que dans le cadre de la présente invention, la poudre 54 soit conçue pour générer un gaz par combustion, et non point par effet déflagrant ou détonant.

L'élément étanche gonflable 60 est de préférence formé d'un tube allongé, conditionné au repos à l'état aplati. Ainsi au repos, les deux faces principales planes du tube aplati 60 s'étendent parallèlement à la face d'attaque arrière 36 du poinçon 30 comme on le voit sur la figure 2. L'une des faces principales planes du tube aplati 60 repose d'ailleurs sur cette face d'attaque plane 36. L'autre face du tube 60 repose sur une face d'appui fixe 71.

Plus précisément encore, dans le cadre de la présente invention, l'élément étanche gonflable 60 est formé de préférence d'un tube en acier inoxydable.

La liaison étanche entre le tube 60 et le générateur pyrotechnique de gaz 50 peut être réalisée par tout moyen approprié, par exemple par sertissage.

L'extrémité opposée du tube peut être obturée par tout moyen approprié.

A titre d'exemple non limitatif, le tube étanche gonflable 60 peut posséder un diamètre de l'ordre de 4mm et une épaisseur de paroi de l'ordre de 0,2 à 0,3mm.

L'homme de l'art comprendra aisément que lorsque le générateur 50 développe un gaz sous pression à l'intérieur du tube 60, celui-ci passe de son état aplati au repos à un état gonflé de section droite sensiblement circulaires.

Ainsi, la déformation du tube gonflable 60 prenant appui sur la surface 71, assure le déplacement du poinçon 30 contre la structure à rompre 10, de sorte que celle-ci est prise en sandwich entre les deux organes de sollicitation, tels que le poinçon 30 et l'enclume 20.

Comme on l'a dit précédemment, dans le cadre de la présente invention, le poinçon 30 est de préférence adapté pour assurer la rupture de l'élément à rompre 10, non point par pénétration dans la matière composant cette structure à rompre 10 et donc réduction progressive de l'épaisseur de celle-ci, mais par déformation locale en flexion des fibres composant la structure à rompre au-delà de leur capacité de déformation.

Pour cela, l'enclume 20 est formée de préférence d'un matériau moins dur que le poinçon 30, pour accepter au moins une légère pénétration de la structure à rompre 10 et éventuellement du poinçon 30, sous l'effet de la sollicitation de celui-ci, pour assurer la flexion précitée.

A titre d'exemple non limitatif, l'enclume 20 peut être formée d'un acier mi-dur. Cependant de nombreux autres matériaux peuvent être envisagés, y compris par exemple des matériaux à base d'élastomère ou des matériaux ayant un comportement plastique, tels que aluminium, cuivre, plomb, etc...

A titre d'exemple non limitatif, l'enclume 20 peut être formée d'un matériau présentant une limite de résistance à la traction σe inférieure à 600MPa.

Le cas échéant, l'enclume 20 peut d'ailleurs posséder, en regard de l'arête 33 du poinçon 30 une rainure ou creusure facilitant la flexion du ruban, lorsque celui-ci prend appui sur les berges de ladite rainure ou creusure, tandis que le segment intermédiaire de la structure à rompre 10 pénètre dans ladite rainure ou creusure sous l'effet du poinçon.

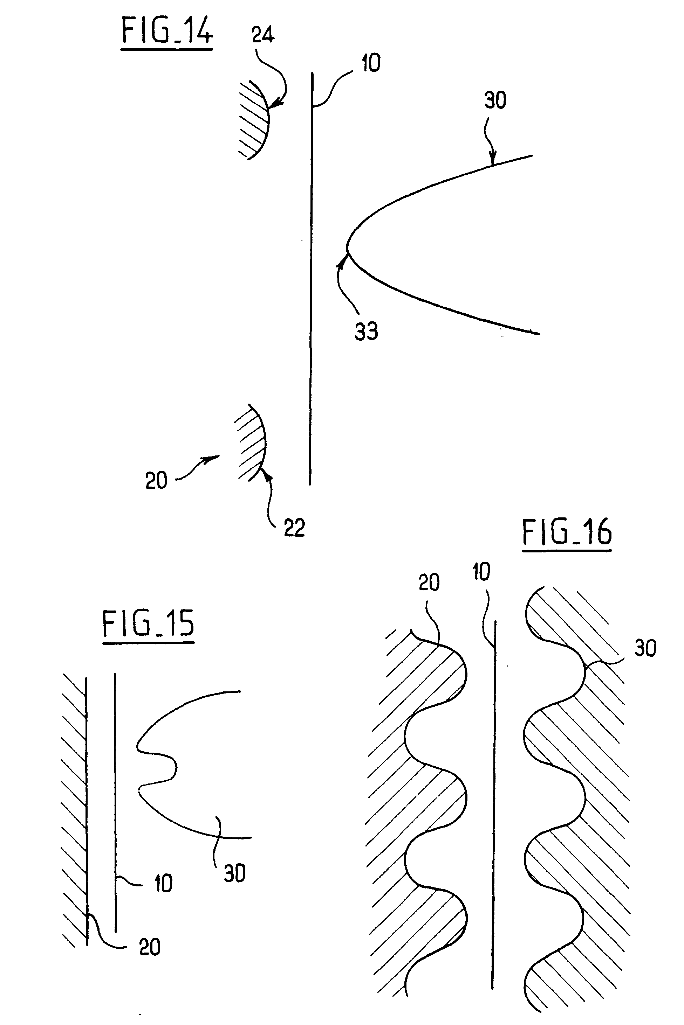

Le cas échéant les moyens de retenue 20 peuvent d'ailleurs être formés uniquement de deux contre-appui 22, 24 situés sur le côté des fibres 10 opposé au poinçon 30, comme on le voit sur la figure 14, les deux contre-appui 22, 24 étant disposés respectivement de part et d'autre de l'arête 33 du poinçon 30, selon la direction longitudinale des fibres 10.

Selon une autre caractéristique avantageuse de la présente invention, la distance séparant les deux contre-appui 22, 24 est comprise entre une fois le diamètre ou épaisseur des fibres 10 et l'amplitude de déplacement relatif des moyens de sollicitation 20, 30, préférentiellement entre deux fois le diamètre ou épaisseur des fibres 10 et l'amplitude de déplacement relatif des moyens de sollicitation 20, 30.

On a illustré sur la figure 15 une variante de réalisation selon laquelle les organes de sollicitation comprennent un poinçon 30 en creux, placé en regard d'une enclume 20 moins dure, par exemple à base d'élastomère.

On a illustré sur la figure 16 une autre variante de réalisation selon laquelle les deux organes de sollicitation sont formés d'organes en peigne placés en regard et décalés relativement d'un demi pas selon la direction longitudinale des fibres.

Lorsque les fibres 10 sont sollicitées en flexion par les organes de sollicitation 20 et 30, la partie des fibres située sur l'intérieur de la courbure subit une contrainte en compression. Et inversement la partie des fibres située sur l'extérieur de la courbure subit une contrainte à la traction σ1 due à la flexion, à laquelle se rajoute éventuellement un effort σ2 de traction appliquée, en dehors de toute flexion, aux fibres.

La contrainte maximale admissible avant rupture, par les fibres 10 peut être déterminée par la relation :

$$\sigma = [(d/2)\ E\ ]/\ r$$

en appelant :

- σ la contrainte maximale locale d'extension ou de compression (σ = σ1 + σ2),
- E le module d'élasticité longitudinal,
- r le rayon de courbure moyen et
- d le diamètre ou épaisseur de la poutre constituée par une fibre 10.

La Demanderesse a par ailleurs déterminé que la formule ci-dessus conduisait aux rayons de courbure r à la rupture suivants pour une fibre de diamètre d de 10 μm :

|  | E (en Gpa) | σ (en Mpa) | r (en mm) |
|---|---|---|---|
| Carbone haut module | 3600 | 2400 | 0,75 |
| Carbone haute résistance | 260 | 3200 | 0,4 |
| Verre R | 85 | 3200 | 0,13 |
| Verre E | 74 | 2450 | 0,15 |
| Kevlar 49 | 132 | 3000 | 0,22 |
| Kevlar 29 | 82 | 3000 | 0,13 |
| Acier (35 NCD 16) | 220 | 1600 | 0 ,68 |

Ainsi la Demanderesse a déterminé que de préférence le rayon maximale de l'arête 33 du poinçon 30 est de l'ordre de 1 mm, préférentiellement au maximum de l'ordre de 0,75 mm.

De préférence, dans le cadre de la présente invention, il est prévu en outre des moyens adaptés pour maintenir initialement le poinçon 30 éloigné de la structure 10 à rompre, tant que le générateur 50 n'est pas initié.

De tels moyens de maintien provisoire peuvent être formés de nombreuses structures appropriées.

Dans le cadre de la présente invention, de tels moyens de maintien provisoire peuvent être formés de deux bandes en matériau élastique, par exemple en élastomère silicone 37, 38, disposées respectivement entre la structure à rompre 10 et l'un des flancs 32, 34 du poinçon.

A titre d'exemple non limitatif, il peut s'agir de deux bandes en élastomère silicone d'un diamètre de l'ordre de 2,5mm.

Dans le cadre de la présente invention, de tels moyens de maintien provisoire peuvent être adaptés par exemple pour maintenir l'arête 33 du poinçon 30 à une distance de l'ordre de 0,5mm de la structure à rompre 10.

Pour assurer la rupture de la structure 10, le tube 60 doit recevoir environ 2,5cm$^3$ de gaz sous 500bars.

Ainsi, le générateur 50 est de préférence adapté pour produire au moins 1,25 l de gaz sous une atmosphère.

La Demanderesse a obtenu des résultats très satisfaisants au cours d'essais de sectionnement d'une sangle de carbone à fibres omnidirectionnelles d'une largeur de l'ordre de 25mm et une épaisseur de l'ordre de 0,3mm. Ces essais réalisés avec un dispositif de rupture du type illustré sur les figures 1 et 2 et précédemment décrites, ont en effet conduit à un niveau de chocs sur la structure à rompre 10 et son environnement inférieur à 40g.

Le dispositif comprend en outre des moyens 70 conçus pour maintenir en position le ruban gonflable 60 et guider le poinçon 30 entre une position rétractée éloignée de la structure à rompre 10 telle qu'illustrée sur la figure 2 et une position de travail dans laquelle l'arête 33 du poinçon 30 sollicite la structure à rompre 10 pour assurer une flexion locale de celle-ci et entraîner sa rupture.

Ces moyens 70 assurant le support du ruban 60 et le guidage du poinçon 30 peuvent faire l'objet de nombreuses variantes de réalisation.

Selon le mode de réalisation illustré sur les figures 1et 2, on a ainsi représenté de tels moyens support sous forme d'un bloc 72 possédant une gorge étagée.

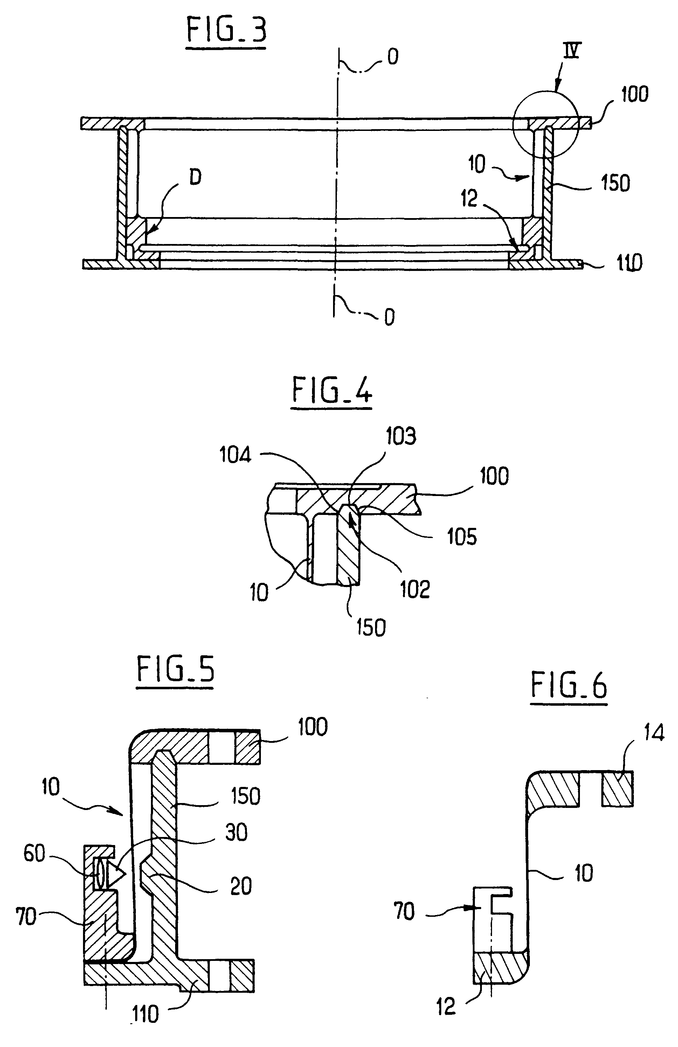

On va maintenant décrire en regard des figures 3 et 4 annexées la structure d'un équipement mettant en oeuvre un tel dispositif de rupture. Comme indiqué précédemment un tel équipement peut par exemple être conformé pour servir de support ou d'interface provisoire à des microsatellites embarqués sur une fusée ou un lanceur, pour libérer ceux-ci en un point de largage déterminé et contrôlé.

Selon la présente invention, un tel équipement comprend une structure 10 placée en traction entre deux éléments support 100, 110, un dispositif 20, 30, 40, 50 de rupture sans choc mécanique associé à cette structure en traction 10 pour rompre celle-ci à la demande, et une poutre 150 travaillant à la compression intercalée entre ces deux éléments support 100, 110, en parallèle de la structure à rompre 10. Dans un tel équipement la poutre 150 permet de maintenir la position relative des éléments supports 100, 110, en combinaison avec la structure en traction 10. Et il suffit de rompre cette structure en traction 10 pour supprimer le lien existant entre les deux éléments support 100, 110 et libérer ainsi l'un au moins de ceux-ci ainsi que les systèmes tels que des satellites, qui lui sont liés.

La structure illustrée sur les figures 3 et 4 annexées est une structure annulaire centrée autour d'un axe O-O.

Cette structure comprend deux rondelles 100, 110 parallèles entre elles tenant lieu d'éléments supports précités, dont le plan moyen est perpendiculaire à l'axe O-O et centrées sur ce dernier.

La rondelle inférieure 110 peut reposer par exemple sur une embase, telle que le châssis d'un lanceur de satellites tandis que la rondelle supérieure 100 sert elle-même de console support pour ces derniers, ou tout autre équipement équivalent que l'on souhaite libérer à un instant contrôlé avec précision.

Les deux rondelles 100, 110 sont reliées entre elles par une structure 10 travaillant à la traction. D'autre part un élément ou poutre 150 travaillant à la compression est intercalé entre ces rondelles 100 et 110, en parallèle de la structure en traction 10.

La structure à rompre 10 est associée à un dispositif de rupture sans choc schématisé sur la figure 3 et identifié sous la référence générale D, conforme à la présente invention, comprenant des organes de sollicitation 20, 30 disposés respectivement de part et d'autre de la structure 10, par exemple sous forme d'un poinçon 30 associé à un générateur pyrotechnique 50 et à un organe étanche gonflable 60 comme indiqué précédemment.

Comme on l'a indiqué précédemment, dans ce contexte, il suffit de rompre la structure 10, par mise en oeuvre des organes de sollicitation 20, 30, pour désolidariser les rondelles 100, 110 et libérer ainsi les éléments, tels des microsatellites, portés par la rondelle 100.

Dans le cadre de cette application, la structure à rompre 10 peut être formée d'un anneau continu centré autour de l'axe O-O (auquel cas, il est prévu un ensemble de segments de poinçon 30 couvrant la quasi-totalité de la surface intérieure de cette structure à rompre 10) ou de plusieurs éléments répartis autour de l'axe O-O (auquel cas il est prévu un poinçon 30 couvrant la largeur de chaque structure à rompre 10, en regard respectivement de chacune de celles-ci).

On notera que l'élément 10 à rompre travaillant à la traction et l'élément 150 travaillant à la compression s'étendent de préférence parallèlement à l'axe central O-O.

La structure à rompre 10 est solidaire, par l'une de ses extrémités axiales, de l'une des rondelles, par exemple la rondelle 100, et solidaire à son autre extrémité d'un flasque 12 conçu pour être fixé par tout moyen approprié, par exemple par vissage sur l'autre rondelle, telle que 110.

De son côté, l'élément travaillant à la compression est formé d'une paroi ou poutre encastrée dans l'une au moins des rondelles 100, 110 telle que la rondelle 100, pour pouvoir être séparée de celle-ci lors de la rupture de la structure à rompre 10. Selon le mode de réalisation particulier illustré sur les figures 3 et 4, l'élément travaillant à la compression 150 est formé d'un cylindre en aluminium dont les faces interne et externe sont délimitées par des génératrices parallèles entre elles et parallèles à l'axe O-O. La paroi 150 est venue de matière avec la rondelle inférieure 110 et encastrée dans la rondelle supérieure 100.

La géométrie de l'encastrement de la paroi 150 travaillant à la compression dans la rondelle supérieure 100 peut faire l'objet de nombreuses variantes.

Selon le mode de réalisation non limitatif donné sur les figures annexées, la rondelle 100 possède une gorge annulaire 102 définie par une surface de base 103 en forme de couronne perpendiculaire à l'axe O-O et centrée sur celui-ci définissant le fond de gorge, et deux flancs 104, 105 divergents entre eux en éloignement de la surface de base 103 et en rapprochement de la surface extérieure de la rondelle 100. Les deux flancs 104, 105 sont de préférence symétriques par rapport à une génératrice parallèle à l'axe O-O et inclinés par rapport à celle-ci d'un angle compris entre 10 et 60°.

L'extrémité de la paroi 150 travaillant à la compression a une géométrie complémentaire de cette gorge 102.

Bien entendu en variante, on peut prévoir une cloison 150 travaillant à la compression reliée par tout moyen approprié à la rondelle de base 110.

A titre d'exemple non limitatif, la paroi 150 travaillant à la compression peut être formée en aluminium, d'une épaisseur de l'ordre de 5mm et d'une hauteur (distance séparant les deux rondelles 100, 110) de l'ordre de 80mm, le diamètre intérieur des rondelles 100, 110 étant de l'ordre de 230mm.

On a illustré sur la figure 5, une variante de réalisation selon laquelle l'élément 70 formant guide pour le tube gonflable 60 et le poinçon 30 est fixé sur la rondelle 110, tandis que l'enclume 20 est constituée par l'élément 150 tenant lieu d'élément résistant à la compression. Plus précisément encore, l'enclume 20 est formée au niveau d'une surépaisseur de cet élément 150.

Comme le mode de réalisation des figures 3 et 4, l'élément 150 résistant à la compression est disposé radialement sur l'extérieur de l'élément 10.

L'une des extrémités de la structure 10 à rompre est prise en sandwich entre la pièce 70 servant de guide et la rondelle 110. L'autre extrémité de la structure à rompre 10 est fixée par tout moyen approprié sur la seconde rondelle 100.

On a illustré sur la figure 6, une variante de réalisation selon laquelle la structure 10 à rompre est formée d'une pièce composite, munie de surépaisseurs à chacune de ses extrémités pour la formation de flasques 12, 14 destinés à assurer la fixation sur les rondelles 110, 100 ou tout moyen équivalent.

Plus précisément encore, selon le mode de réalisation illustré sur la figure 6, la pièce composite comporte sur les extrémités de l'élément à rompre 10 formé typiquement d'une jupe cylindrique, respectivement des flasques 12, 14 globalement perpendiculaires à l'axe de l'élément cylindrique 10 et dirigés respectivement, pour le flasque 12, vers l'intérieur, et pour le flasque 14, vers l'extérieur.

La variante ainsi décrite en regard de la figure 6 est composée d'un élément 10 cylindrique et de deux flasques annulaires 12, 14. Selon une autre variante, on peut prévoir un élément à rompre 10 formé d'un ruban rectiligne, muni à chacune de ses extrémités, venues de matière, de surépaisseurs 12, 14 analogues au moyen illustré sur la figure 6.

La pièce 70 servant de guide au tube gonflable 60 et au poinçon 30 peut être venue de matière sur le flasque 12 ou rapportée et fixée sur celui-ci par tout moyen approprié.

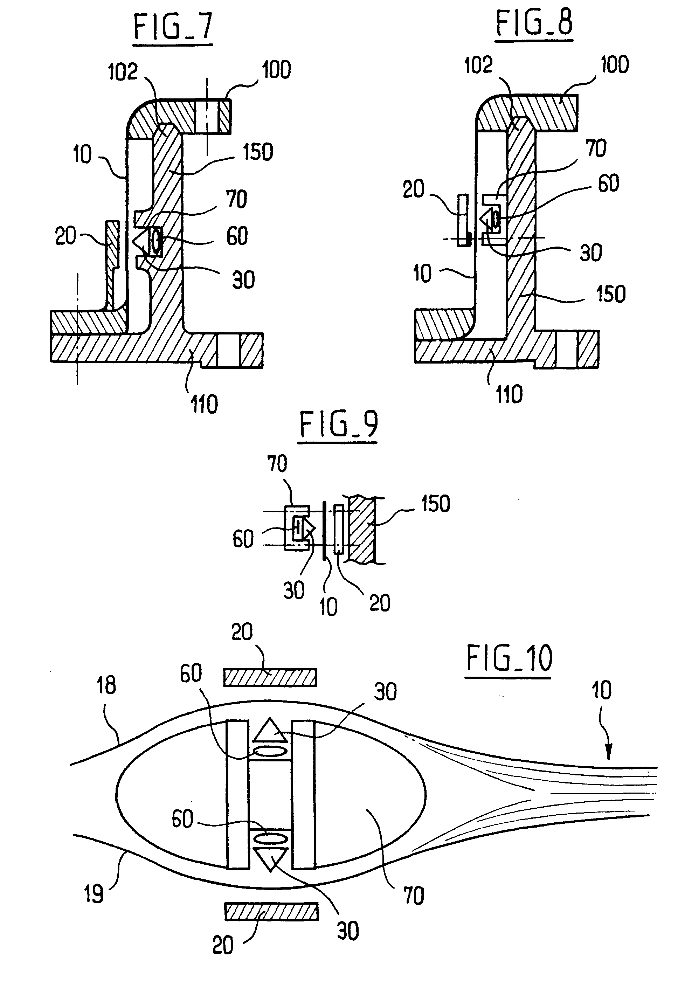

On a illustré sur la figure 7, une autre variante de réalisation selon laquelle l'élément de compression 150 sert de guide au poinçon 30 et au tube gonflable 60. Dans ce cas, il est prévu une enclume 20 sur le côté de l'élément 10 à rompre opposé au poinçon 30. Cette enclume 20 est fixée, par tout moyen approprié, sur l'un des flasques ou rondelles 100, 110.

Plus précisément encore, selon le mode de réalisation illustré sur la figure 7, l'élément 150 résistant à la compression est muni dans sa masse d'une gorge assurant le guidage du tube gonflable 60 et du poinçon 30.

En revanche, selon la variante illustrée sur la figure 8, le tube gonflable 60 et le poinçon 30 sont placés dans un guide 70 rapporté sur l'élément 150 résistant à la compression. Par ailleurs, là encore, selon la figure 8, il est prévu une enclume 20 sur le côté de l'élément à rompre 10 opposé au poinçon 30. On peut d'ailleurs prévoir que l'enclume 20 soit elle-même solidaire du guide 70.

Une autre variante encore illustrée sur la figure 9 consiste à placer l'enclume 20 formée d'une pièce rapportée sur l'élément 150 résistant à la compression et le guide 70 sur le côté de l'élément à rompre 10 opposé à l'enclume.

Dans les différents modes de réalisation précédemment décrits, en regard des figures 3 et suivantes, l'élément à rompre 10 s'étend dans une direction générale parallèle à l'axe O-O de la structure annulaire. Et le poinçon 30 est monté à déplacement dans une direction généralement transversale à cet axe O-O.

Par ailleurs, on a indiqué précédemment que l'élément à rompre 10 peut être formé soit d'une structure annulaire continue centrée autour de l'axe O-O, soit d'éléments discrets répartis autour de cet axe O-O.

Dans ce contexte, l'élément à rompre 10 peut être formé par exemple d'un ruban. Celui-ci peut être unitaire, c'est-à-dire formé d'un brin unique, par exemple de section droite rectiligne allongée, ou encore circulaire ou oblongue, ou peut être scindé en différents brins.

Selon une autre variante, l'élément à rompre 10 peut être formé d'un ruban ou équivalent tubulaire, c'est à dire possédant une section droite en boucle, par exemple sous forme d'une courbe fermée. Il s'agit dans ce cas, par exemple, d'un tricot torique aplati.

Dans ces derniers cas, on peut prévoir de placer l'un au moins des éléments enclume ou poinçon 30 dans l'espace entre les différents brins composant l'élément à rompre ou encore dans l'espace interne de la section droite d'un ruban tubulaire.

On a ainsi illustré sur la figure 10, une structure support en forme d'ogive 70 placée entre deux brins 18, 19 d'un élément 10 à rompre, et servant de guide à des tronçons de tube gonflable 60 et des segments de poinçon 30 placés en regard d'enclumes 20 complémentaires de sorte que les brins 18, 19 soient pris en sandwich entre lesdites enclumes 20 et les segments de poinçon 30.

Dans le cas où une telle ogive 70 est placée à l'intérieur de la section droite d'un ruban 10 présentant une section droite en courbe fermée, il est bien entendu nécessaire que l'ogive 70 supporte une pluralité de tronçons de tube gonflable 60 et de poinçon 30 couvrant en complément toute la périphérie de l'élément à rompre 10.

Selon le mode de réalisation illustré sur la figure 10, les différents tronçons de tube gonflable 60 et segments de poinçon 30 sont situés globalement dans un plan commun orthogonal à l'axe du ruban 10. En variante, cependant, notamment lorsque les segments de poinçon 30 doivent couvrir toute la périphérie de l'ogive 70, on peut prévoir d'étager ceux-ci longitudinalement sur l'ogive 70 pour prévoir un recouvrement entre les extrémités des différents segments de poinçon 30 et garantir ainsi une rupture complète du ruban 10.

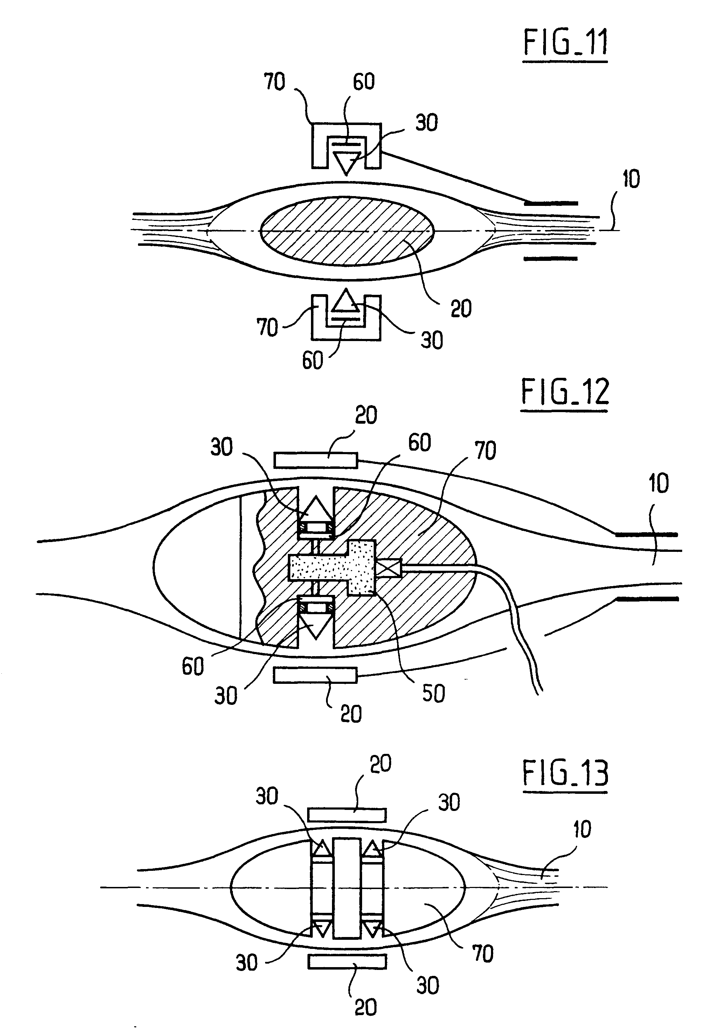

On a illustré sur la figure 11 une disposition inverse, c'est-à-dire une enclume 20 formée d'une ogive située au centre du ruban à rompre et des structures 70 assurant le guidage de tube gonflable 60 et de segments de poinçon 30 associés disposés en regard, sur l'extérieur de l'élément à rompre 10.

Dans le contexte de la figure 10, on peut prévoir de disposer le générateur pyrotechnique de gaz sous pression à l'extérieur de l'ogive 70 et de la structure à rompre 10. Cependant, comme on l'a illustré sur la figure 12, en variante, on peut prévoir d'intégrer le générateur pyrotechnique 50 sur l'ogive 70. Dans ce cas, on peut utiliser un générateur pyrotechnique 50 commun aux différents segments de poinçon 30 ou encore un générateur pyrotechnique 50 respectivement associé à chaque poinçon 30.

On a illustré sur la figure 13, une autre variante de réalisation selon laquelle, il est prévu deux poinçons 30 associés chacun à un générateur pyrotechnique respectif (non représenté sur la figure 13 pour simplifier l'illustration) en regard de chacune des zones à sectionner de l'élément 10. Bien entendu, il est prévu une enclume 20 en regard adaptée en conséquence.

Cette disposition illustrée sur la figure 13 permet un effet redondant et une garantie de rupture de la structure en cas de déficience de l'un des générateurs pyrotechniques 50, ou encore du tube gonflable étanche 60 associé, voire même du déplacement du poinçon 30.

L'utilisation d'une telle double structure de poinçon 30 peut s'appliquer à l'ensemble des variantes de la présente invention précédemment décrite.

Plus généralement dans le cadre de la présente invention, pour garantir le fonctionnement du dispositif de rupture, on peut doubler toute la chaine opérationnelle, de l'initiateur 56 au poinçon 30, sous forme de deux chaines de rupture redondantes placées en parallèle, ou doubler au moins certains éléments sensibles d'une telle chaine opérationelle.

Bien entendu la présente invention n'est pas limitée aux mode de réalisation particuliers qui viennent d'être décrits, mais s'étend à toutes variantes sans sortir du cadre des revendications.

Selon les modes de réalisation précédemment décrits, il est prévu des moyens de retenue 20 fixes et un poinçon 30 mobile. En variante cependant on peut prévoir inversement un poinçon 30 fixe et des moyens de retenue 20 mobiles en regard sous l'effet des moyens 40 à commande pyrotechnique, ou encore un poinçon 30 et des moyens de retenue 20 associés à des moyens de déplacement respectifs de sorte que lors de l'actionnement chacun du poinçon 30 et des moyens de retenue 20 soit déplacé en rapprochement des fibres 10. Cette disposition s'applique d'une façon générale à l'ensemble des moyens de sollicitation quel que soit leur mode de réalisation.

## Revendications

1.  Dispositif comprenant une structure (10) placée en traction entre deux éléments support (100, 110) et un dispositif (20, 30, 40, 50) de rupture associé à cette structure en traction (10) pour rompre celle-ci à la demande, **caractérisé par le fait qu'**il comprend de plus une poutre (150) travaillant à la compression intercalée entre ces deux éléments support (100, 110), en parallèle de la structure à rompre (10).

2.  Dispositif selon la revendication 1, dans lequel la structure (10) destinée à être rompue comprend des fibres prétendues, **caractérisé par le fait qu'**il comprend deux organes de sollicitation (20, 30), disposés respectivement de part et d'autre des fibres (10), et des moyens de commande (40) adaptés pour provoquer sur demande un déplacement relatif en rapprochement des organes de sollicitation (20, 30), ces derniers étant conformés pour imposer, lors de ce déplacement en rapprochement, un rayon de courbure sur les fibres (10), inférieur au seuil de courbure de celles-ci conduisant à une rupture par flexion.

3.  Dispositif selon la revendication 2, **caractérisé par le fait que** les organes de sollicltation comprennent un poinçon (30) et des moyens de retenue (20) disposés respectivement de part et d'autre des fibres (10).

4.  Dispositif selon l'une des revendications 2 ou 3, **caractérisé par le fait que** les moyens de commande (40) sont de type pyrotechnique.

5.  Dispositif selon l'une des revendications 2 à 4, **caractérisé par le fait que** les moyens de commande (40) comprennent une charge pyrotechnique (50) apte à générer un gaz haute pression et un organe étanche gonflable (60) relié à la charge pyrotechnique (50) et en contact avec l'un au moins des organes de sollicitation (20, 30) pour opérer un déplacement relatif entre ceux-ci lorsque ladite charge (50) est initiée.

6.  Dispositif selon l'une des revendications 2 à 5, **caractérisé par le fait que** la structure à rompre (10) est constituée au moins en partie de matériau composite.

7.  Dispositif selon l'une des revendications 2 à 6, **caractérisé par le fait que** la structure à rompre (10) est constituée d'une sangle.

8.  Dispositif selon l'une des revendications 2 à 7, **caractérisé par le fait que** la structure à rompre (10) est formée à base de fibres choisies dans le groupe comprenant le carbone, le verre, l'aramide.

9.  Dispositif selon l'une des revendications 2 à 8, **caractérisé par le fait que** l'élément à rompre (10) n'est pas homogène sur toute sa longueur : Il est constitué exclusivement de fibres au niveau de la zone à rompre placée au regard des organes de sollicitation (30) et constitué d'un matériau composite, fibres noyées dans un matériau synthétique, en dehors de cette zone à rompre.

10. Dispositif selon l'une des revendications 2 à 9, **caractérisé par le fait que** les fibres constituant la structure à rompre (10) possèdent un module d'élasticité longitudinal supérieur à 20 000MPa.

11. Dispositif selon l'une des revendications 2 à 10, **caractérisé par le fait que** les fibres composant la structure à rompre (10) ont un diamètre de l'ordre de 0,1 à 25$\mu$m, voire de 0,1 à 10$\mu$m.

12. Dispositif selon l'une des revendications 2 à 11, **caractérisé par le fait que** l'un des organes de sollicitation comprend un poinçon (30) réalisé en acier dur.

13. Dispositif selon l'une des revendications 2 à 12, **caractérisé par le fait que** l'un des organes de sollicitation comprend un poinçon (30) qui définit un dièdre dont l'angle est compris entre 30 et 90°, de préférence de l'ordre de 60°.

14. Dispositif selon l'une des revendications 3 et 12 à 13, **caractérisé par le fait que** le poinçon (30) possède une arête (33) dont le rayon de courbure(r)maximal est défini par la relation

$$r = [(d/2)E]/\sigma$$

dans laquelle

.   $\sigma$ représente la contrainte maximale locale d'extension ou de compression,
.   E représente le module d'élasticité longitudinal, et
.   d représente le diamètre ou épaisseur de la poutre constituée par une fibre (10).

15. Dispositif selon l'une des revendications 3 et 12 à 14, **caractérisé par le fait que** le poinçon (30) possède une arête (33) dont le rayon de courbure (r) est au maximum de l'ordre de 1 mm, préférentiellement au maximum de l'ordre de 0,75 mm.

**16.** Dispositif selon l'une des revendications 2 à 15, **caractérisé par le fait que** la longueur et la structure du tube gonflable (60) sont adaptés pour découpler mécaniquement le générateur pyrotechnique (50) et le poinçon (30) afin d'éviter toute transmission de vibrations du générateur pyrotechnique (50) vers le poinçon (30).

**17.** Dispositif selon l'une des revendications 2 à 16, **caractérisé par le fait que** les moyens de commande (40) comprennent un générateur pyrotechnique (50) qui possède un initiateur électrique (56).

**18.** Dispositif selon l'une des revendications 2 à 14, **caractérisé par le fait que** les moyens de commande (40) comporte un générateur pyrotechnique (50) qui comprend une charge (54) susceptible de générer un gaz par combustion.

**19.** Dispositif selon la revendication 5, **caractérisé par le fait que** l'organe étanche gonflable (60) est formé d'un tube en acier inoxydable.

**20.** Dispositif selon l'une des revendications 5 et 19, **caractérisé par le fait que** l'organe étanche gonflable (60) possède un diamètre de l'ordre de 4mm.

**21.** Dispositif selon l'une des revendications 2 à 20, **caractérisé par le fait que** les moyens de sollicitation comprennent un poinçon et des moyens de retenue (20) formés d'une enclume situés respectivement de part et d'autre de la structure à rompre (10).

**22.** Dispositif selon la revendication 21, **caractérisé par le fait que** l'enclume (20) est réalisée en un matériau moins dur que le poinçon (30).

**23.** Dispositif selon l'une des revendications 21 ou 22, **caractérisé par le fait que** l'enclume (20) est réalisée en acier mi-dur.

**24.** Dispositif selon l'une des revendications 21 ou 22, **caractérisé par le fait que** l'enclume (20) est réalisée à base d'élastomère ou d'un matériau à comportement plastique, tel que aluminium, cuivre ou plomb.

**25.** Dispositif selon l'une des revendications 21 à 23, **caractérisé par le fait que** l'enclume (20) comprend une rainure ou creusure en regard du poinçon (30).

**26.** Dispositif selon l'une des revendications 2 à 25 prise en combinaison avec la revendication 3, **caractérisé par le fait que** les moyens de retenue (20) comprennent deux contre-appui (22, 24) situés sur le côté des fibres (10) opposé au poinçon (30), les deux contre-appui (22, 24) étant disposés respectivement de part et d'autre de l'arête (33) du poinçon (30), selon la direction longitudinale des fibres (10).

**27.** Dispositif selon la revendication 26, **caractérisé par le fait que** la distance séparant les deux contre-appui (22, 24) est comprise entre un fois, de préférence deux fois, le diamètre ou épaisseur des fibres (10) et l'amplitude de déplacement relatif des moyens de sollicitation (20, 30).

**28.** Dispositif selon l'une des revendications 2 à 27, **caractérisé par le fait que** les moyens de sollicitation (20, 30) sont formés de deux structures en peigne disposées respectivement de part et d'autre des fibres (10).

**29.** Dispositif selon l'une des revendications 2 à 28, **caractérisé par le fait qu'**il comprend en outre des moyens (37, 38) adaptés pour maintenir les moyens de sollicitation, tels qu'un poinçon (30), éloignés de la structure à rompre (10) avant mise en oeuvre du générateur pyrotechnique (50).

**30.** Dispositif selon la revendication 29, **caractérisé par le fait que** les moyens de maintien provisoire sont constitués de bandes en élastomère silicone (37, 38).

**31.** Dispositif selon l'une des revendications 2 à 30, **caractérisé par le fait que** le générateur pyrotechnique (50) est adapté pour émettre au moins 1,5 l de gaz sous une atmosphère.

**32.** Dispositif selon l'une des revendications 1 à 31, **caractérisé par le fait que** l'élément (150) travaillant à la compression est encastré par une extrémité dans un élément de structure complémentaire (100).

**33.** Dispositif selon l'une des revendications 1 à 32, **caractérisé par le fait qu'**il possède une structure annulaire.

**34.** Dispositif selon la revendication 33, **caractérisé par le fait que** la structure à rompre (10) est formée d'un anneau continu.

**35.** Dispositif selon la revendication 33, **caractérisé par le fait que** la structure à rompre (10) est formée de plusieurs éléments répartis autour de l'axe O-O de la structure.

**36.** Dispositif selon l'une des revendications 1 à 35, **caractérisé par le fait que** l'élément (150) travaillant à la compression est venu de matière avec l'un des deux éléments support (100, 110).

**37.** Dispositif selon l'une des revendications 1 à 36 prises en combinaison avec la revendication 3, **caractérisé par le fait que** l'élément (150) travaillant à la compression sert en outre de moyens de retenue (20).

**38.** Dispositif selon l'une des revendications 1 à 36 prises en combinaison avec la revendication 3, **caractérisé par le fait que** l'élément (150) travaillant à la compression sert en outre de guide au poinçon (30) et le cas échéant à un tube gonflable (60) appartenant aux moyens de commande.

**39.** Dispositif selon l'une des revendications 2 à 38, **caractérisé par le fait que** la structure à rompre (10) est formée d'une pièce en matériau composite munie d'une surépaisseur (12, 14) à l'une de ses extrémités au moins.

**40.** Dispositif selon l'une des revendications 2 à 39, **caractérisé par le fait que** la structure à rompre (10) peut être scindée en plusieurs brins.

**41.** Dispositif selon l'une des revendications 2 à 40, **caractérisé par le fait que** la structure à rompre (10) est formée d'une structure tubulalre.

**42.** Dispositif selon l'une des revendications 2 à 41, **caractérisé par le fait qu'**ll comprend une ogive (70) placée entre différents brins de la structure à rompre (10).

**43.** Dispositif selon la revendication 42, **caractérisé par le fait que** l'ogive (70) porte au moins un poinçon (30).

**44.** Dispositif selon la revendication 42, **caractérisé par le fait que** l'ogive (70) sert de moyens de retenue.

**45.** Dispositif selon l'une des revendications 42 à 44, **caractérisé par le fait que** l'ogive (70) porte un générateur pyrotechnique (50).

**46.** Dispositif selon l'une des revendications 42 à 45, **caractérisé par le fait que** l'ogive porte plusieurs poinçons (30).

**47.** Dispositif selon l'une des revendications 2 à 46, **caractérisé par le fait qu'**il comprend deux poinçons (30) associés à des générateurs pyrotechniques respectifs (50) en regard de chaque zone à sectionner de la structure à rompre (10).

**48.** Dispositif selon l'une des revendications 2 à 47, **caractérisé par le fait qu'**il comprend au moins deux dispositifs de rupture redondants (20, 30, 40, 50) placés en parallèle.

**49.** Dispositif selon l'une des revendications 2 à 48, **caractérisé par le fait que** certains éléments au moins (20, 30, 40, 50) du dispositif de rupture sont doublés pour garantir la fiabilité de l'ensemble.

**Patentansprüche**

**1.** Vorrichtung mit einer Struktur (10), die unter Zug zwischen zwei Auflageelementen (100, 110) angeordnet ist, und mit einer Vorrichtung zum Brechen bzw. Trennen (20, 30, 40, 50), die mit dieser Struktur unter Zug (10) verbunden ist, um diese bei Bedarf zu brechen bzw. zu trennen, **dadurch gekennzeichnet, daß** sie des weiteren einen unter Druck arbeitenden Träger (150) aufweist, der parallel zur zu brechenden bzw. trennenden Struktur (10) zwischen den beiden Auflageelementen (100, 110) angeordnet ist.

**2.** Vorrichtung nach Anspruch 1, bei der die zu brechende Struktur (10) vorgespannte Fasern aufweist, **dadurch gekennzeichnet, daß** sie zwei auf beiden Seiten der Fasern (10) angeordnete Belastungsmittel (20, 30) und Steuermittel (40) aufweist, die geeignet sind, um bei Bedarf eine relative Annäherungsbewegung der Belastungsmittel (20, 30) hervorzurufen, wobei letztere aufeinander abgestimmt sind, um während der Annäherungsbewegung den Fasern (10) einen Krümmungsradius aufzuzwingen, der unter ihrer Krümmungsschwelle liegt und zu einem Biegebruch führt.

**3.** Vorrichtung nach Anspruch 2, **dadurch gekennzeichnet, daß** die Belastungsmittel einen Dorn (30) und Rückhaltemittel (20) aufweisen, die auf beiden Seiten der Fasern (10) angeordnet sind.

**4.** Vorrichtung nach einem der Ansprüche 2 oder 3, **dadurch gekennzeichnet, daß** die Steuermittel (40) pyrotechnischer Art sind.

**5.** Vorrichtung nach einem der Ansprüche 2 bis 4, **dadurch gekennzeichnet, daß** die Steuermittel (40) eine pyrotechnische Ladung (50), die geeignet ist, ein Gas mit hohem Druck zu erzeugen, und ein dichtes aufblasbares Mittel (60) aufweisen, das mit der pyrotechnischen Ladung (50) verbunden ist und in Kontakt mit mindestens einem der Belastungsmittel (20, 30) ist, um eine relative Bewegung zwischen ihnen auszuführen, wenn die Ladung (50) initiiert wird.

**6.** Vorrichtung nach einem der Ansprüche 2 bis 5, **dadurch gekennzeichnet, daß** die zu brechende Struktur (10) wenigstens teilweise aus zusammengesetztem Material besteht.

**7.** Vorrichtung nach einem der Ansprüche 2 bis 6, **dadurch gekennzeichnet, daß** die zu brechende Struktur (10) aus einem Gurt besteht.

**8.** Vorrichtung nach einem der Ansprüche 2 bis 7, **dadurch gekennzeichnet, daß** die zu brechende Struktur (10) auf Basis von Fasern gebildet ist, die aus der Kohle, Glas und Aramid umfassenden Gruppe gewählt sind.

**9.** Vorrichtung nach einem der Ansprüche 2 bis 8, **dadurch gekennzeichnet, daß** das zu brechende Element (10) nicht auf seiner gesamten Länge homogen ist: es besteht in der zu brechenden Zone, die gegenüber den Belastungsmitteln (30) angeordnet ist, ausschließlich aus Fasern und besteht außerhalb dieser zu brechenden Zone aus einem zusammengesetzten Material, insbesondere aus in ein synthetisches Material eingebetteten Fasern.

**10.** Vorrichtung nach einem der Ansprüche 2 bis 9, **dadurch gekennzeichnet, daß** die die zu brechende Struktur (10) darstellenden Fasern ein longitudinales Elastizitätsmodul über 20000 MPa aufweisen.

**11.** Vorrichtung nach einem der Ansprüche 2 bis 10, **dadurch gekennzeichnet, daß** die die zu brechende Struktur (10) darstellenden Fasern einen Durchmesser in der Größenordnung von 0,1 bis 25 µm und sogar von 0,1 bis 10 µm aufweisen.

**12.** Vorrichtung nach einem der Ansprüche 2 bis 11, **dadurch gekennzeichnet, daß** eines der Belastungsmittel einen Dorn (30) aufweist, der aus hartem Stahl hergestellt ist.

**13.** Vorrichtung nach einem der Ansprüche 2 bis 12, **dadurch gekennzeichnet, daß** eines der Belastungsmittel einen Dorn (30) aufweist, der einen Dieder definiert, dessen Winkel zwischen 30 und 90°, bevorzugt in der Größenordnung von 60° liegt.

**14.** Vorrichtung nach einem der Ansprüche 3 und 12 bis 13, **dadurch gekennzeichnet, daß** der Dorn (30) eine Kante (33) besitzt, deren maximaler Krümmungsradius (r) durch die Beziehung

$$r = [(d/2)E]/\sigma$$

definiert ist, in der

- $\sigma$ die maximale lokale Dehnungs- oder Druckspan nung darstellt,
- E das longitudinale Elastizitätsmodul darstellt, und
- d den Durchmesser oder die Dicke des Trägers darstellt, der aus einer Faser (10) besteht.

**15.** Vorrichtung nach einem der Ansprüche 3 und 12 bis 14, **dadurch gekennzeichnet, daß** der Dorn (30) eine Kante (33) besitzt, deren Krümmungsradius (r) höchstens in der Größenordnung von 1 mm, bevorzugt höchstens in der Größenordnung von 0,75 mm liegt.

**16.** Vorrichtung nach einem der Ansprüche 2 bis 15, **dadurch gekennzeichnet, daß** die Länge und die Struktur des aufblasbaren Rohres (60) angepaßt sind, um den pyrotechnischen Generator (50) und den Dorn (30) mechanisch zu entkoppeln, um jede Übertragung von Schwingungen des pyrotechnischen Generators (50) zum Dorn (30) zu vermeiden.

**17.** Vorrichtung nach einem der Ansprüche 2 bis 16, **dadurch gekennzeichnet, daß** die Steuermittel (40) einen pyrotechnischen Generator (50) aufweisen, der einen elektrischen Auslöser (56) besitzt.

**18.** Vorrichtung nach einem der Ansprüche 2 bis 14, **dadurch gekennzeichnet, daß** die Steuermittel (40) einen pyrotechnischen Generator (50) aufweisen, der eine Ladung (54) umfaßt, die geeignet ist, durch Verbrennung ein Gas zu erzeugen.

**19.** Vorrichtung nach Anspruch 5, **dadurch gekennzeichnet, daß** das dichte aufblasbare Mittel (60) aus einem Rohr aus nicht-oxidierbarem Stahl gebildet ist.

**20.** Vorrichtung nach einem der Ansprüche 5 und 19, **dadurch gekennzeichnet, daß** das dichte aufblasbare Mittel (60) einen Durchmesser in der Größenordnung von 4 mm besitzt.

**21.** Vorrichtung nach einem der Ansprüche 2 bis 20, **dadurch gekennzeichnet, daß** die Belastungsmittel einen Dorn und Rückhaltemittel (20) aufweisen, die aus einem Amboss gebildet sind und auf beiden Seiten der zu brechenden Struktur (10) angeordnet sind.

**22.** Vorrichtung nach Anspruch 21, **dadurch gekennzeichnet, daß** der Amboss (20) aus einem weniger harten Material als der Dorn (30) hergestellt ist.

**23.** Vorrichtung nach einem der Ansprüche 21 oder 22, **dadurch gekennzeichnet, daß** der Amboss (20) aus einem halbharten Stahl hergestellt ist.

**24.** Vorrichtung nach einem der Ansprüche 21 oder 22, **dadurch gekennzeichnet, daß** der Amboss (20) auf Basis von Elastomer oder aus einem Material mit plastischem Verhalten, wie Aluminium, Kupfer oder Blei, hergestellt ist.

**25.** Vorrichtung nach einem der Ansprüche 21 bis 23, **dadurch gekennzeichnet, daß** der Amboss (20) eine Rille oder Vertiefung gegenüber dem Dorns (30) aufweist.

**26.** Vorrichtung nach einem der Ansprüche 2 bis 25 in Kombination mit Anspruch 3, **dadurch gekennzeichnet, daß** die Rückhaltemittel (20) zwei Gegenauflagen (22, 24) aufweisen, die seitlich der Fasern (10) gegenüber dem Dorns (30) angeordnet sind, wobei die beiden Gegenauflagen (22, 24) auf beiden Seiten der Kante (33) des Dorns (30) entlang der longitudinalen Richtung der Fasern (10) angeordnet sind.

**27.** Vorrichtung nach Anspruch 26, **dadurch gekennzeichnet, daß** der die beiden Gegenauflagen (22, 24) trennende Abstand zwischen dem einfachen, bevorzugt zweifachen, des Durchmessers oder der Dicke der Fasern (10) und der Amplitude der relativen Bewegung der Belastungsmittel (20, 30) liegt.

**28.** Vorrichtung nach einem der Ansprüche 2 bis 27, **dadurch gekennzeichnet, daß** die Belastungsmittel (20, 30) aus zwei kammartigen Strukturen gebildet sind, die auf beiden Seiten der Fasern (10) angeordnet sind.

**29.** Vorrichtung nach einem der Ansprüche 2 bis 28, **dadurch gekennzeichnet, daß** sie u.a. Mittel (37, 38) aufweist, die angepaßt sind, um die Belastungsmittel wie einen Dorn (30) vor dem Einsatz des pyrotechnischen Generators (50) entfernt von der zu brechenden Struktur (10) zu halten.

**30.** Vorrichtung nach Anspruch 29, **dadurch gekennzeichnet, daß** die provisorischen Haltemittel aus Bändern aus Silikonelastomer (37, 38) bestehen.

**31.** Vorrichtung nach einem der Ansprüche 2 bis 30, **dadurch gekennzeichnet, daß** der pyrotechnische Generator (50) angepaßt ist, um mindestens 1,5 l Gas bei einer Atmosphäre abzugeben.

**32.** Vorrichtung nach einem der Ansprüche 1 bis 31, **dadurch gekennzeichnet, daß** das unter Druck arbeitende Element (150) an einem Ende in ein Element mit komplementärer Struktur (100) eingebaut ist.

**33.** Vorrichtung nach einem der Ansprüche 1 bis 32, **dadurch gekennzeichnet, daß** sie eine ringförmige Struktur besitzt.

**34.** Vorrichtung nach Anspruch 33, **dadurch gekennzeichnet, daß** die zu brechende Struktur (10) aus einem kontinuierlichen Ring gebildet ist.

**35.** Vorrichtung nach Anspruch 33, **dadurch gekennzeichnet, daß** die zu brechende Struktur (10) aus mehreren Elementen, die um die Achse O-O der Struktur verteilt sind, gebildet ist.

**36.** Vorrichtung nach einem der Ansprüche 1 bis 35, **dadurch gekennzeichnet, daß** das unter Druck arbeitende Element (150) zu einem Gegenstand mit einem der beiden Auflageelemente (100, 110) geworden ist.

**37.** Vorrichtung nach einem der Ansprüche 1 bis 36 in Kombination mit Anspruch 3, **dadurch gekennzeichnet, daß** das unter Druck arbeitende Element (150) u.a. als Rückhaltemittel (20) dient.

**38.** Vorrichtung nach einem der Ansprüche 1 bis 36 in Kombination mit Anspruch 3, **dadurch gekennzeichnet, daß** das unter Druck arbeitende Element (150) u.a. als Führung für den Dorn (30) und ggf. für ein zu den Steuermitteln gehörendes aufblasbares Rohr (60) dient.

**39.** Vorrichtung nach einem der Ansprüche 2 bis 38, **dadurch gekennzeichnet, daß** die zu brechende Struktur (10) aus einem Stück aus zusammengesetztem Material gebildet ist, das mit einem Dickenzuschlag (12,14) zumindest an einem ihrer Enden ausgestattet ist.

**40.** Vorrichtung nach einem der Ansprüche 2 bis 39, **dadurch gekennzeichnet, daß** die zu brechende Struktur (10) in mehrere Stränge getrennt sein kann.

**41.** Vorrichtung nach einem der Ansprüche 2 bis 40, **dadurch gekennzeichnet, daß** die zu brechende Struktur (10) aus einer röhrenförmigen Struktur gebildet ist.

**42.** Vorrichtung nach einem der Ansprüche 2 bis 41, **dadurch gekennzeichnet, daß** sie einen Spitzkegel (70) aufweist, der zwischen die verschiedenen Stränge der zu brechenden Struktur (10) angeordnet ist.

**43.** Vorrichtung nach Anspruch 42, **dadurch gekennzeichnet, daß** der Spitzkegel (70) wenigstens einen Dorn (30) trägt.

**44.** Vorrichtung nach Anspruch 42, **dadurch gekennzeichnet, daß** der Spitzkegel (70) als Rückhaltemittel dient.

**45.** Vorrichtung nach einem der Ansprüche 42 bis 44, **dadurch gekennzeichnet, daß** der Spitzkegel (70) einen pyrotechnischen Generator (50) trägt.

**46.** Vorrichtung nach einem der Ansprüche 42 bis 45, **dadurch gekennzeichnet, daß** der Spitzkegel mehrere Dorne (30) trägt.

**47.** Vorrichtung nach einem der Ansprüche 2 bis 46, **dadurch gekennzeichnet, daß** sie zwei Dorne (30) aufweist, die gegenüber jeder Zone zum Aufteilen der zu brechenden Struktur (10) mit pyrotechnischen Generatoren jeweils verbunden sind.

**48.** Vorrichtung nach einem der Ansprüche 2 bis 47, **dadurch gekennzeichnet, daß** sie wenigstens zwei redundante Vorrichtungen zum Brechen (20, 30, 40, 50) aufweist, die parallel angeordnet sind.

**49.** Vorrichtung nach einem der Ansprüche 2 bis 48, **dadurch gekennzeichnet, daß** wenigstens bestimmte Elemente (20, 30, 40, 50) der Vorrichtung zum Brechen verdoppelt sind, um die Funktionssicherheit des Systems zu garantieren.

**EP 1 152 859 B1**

**Claims**

1. Device comprising a structure (10) placed in tension between two support elements (100, 110) and a rupture device (20, 30, 40, 50) associated with this structure in tension (10) so as to rupture the latter on demand, **characterized in that** it additionally comprises a beam (150) working in compression, inserted between these two support elements (100, 110) in parallel with the structure to be ruptured (10).

2. Device according to Claim 1, in which the structure (10) intended to be ruptured comprises pretensioned fibres, **characterized in that** it comprises two stressing members (20, 30) arranged one on each side of the fibres (10), and operating means (40) designed to, on demand, bring about a relative displacement towards each other of the stressing members (20, 30), the latter being shaped so that, as they move closer together, they impose on the fibres (10) a radius of curvature that is below the threshold of curvature thereof that leads to rupture in bending.

3. Device according to Claim 2, **characterized in that** the stressing members comprise a punch (30) and retaining means (20) arranged one on each side of the fibres (10).

4. Device according to either of Claims 2 and 3, **characterized in that** the operating means (40) are of pyrotechnic type.

5. Device according to one of Claims 2 to 4, **characterized in that** the operating means (40) comprise a pyrotechnic charge (50) capable of generating a high-pressure gas and an inflatable sealed member (60) connected to the pyrotechnic charge (50) and in contact with at least one of the stressing members (20, 30) so as to bring about a relative displacement of these when the the said charge (50) is initiated.

6. Device according to one of Claims 2 to 5, **characterized in that** the structure to be ruptured (10) is made at least in part of composite material.

7. Device according to one of Claims 2 to 6, **characterized in that** the structure to be ruptured (10) consists of a strap.

8. Device according to one of Claims 2 to 7, **characterized in that** the structure to be ruptured (10) is formed on the basis of fibres chosen from the group containing carbon, glass and aramid.

9. Device according to one of Claims 2 to 8, **characterized in that** the element to be ruptured (10) is non-homogeneous over its entire length: it consists essentially of fibres at the rupture zone placed facing the stressing members (30) and consists of a composite material, fibres embedded in a synthetic material, outside this rupture zone.

10. Device according to one of Claims 2 to 9, **characterized in that** the fibres that make up the structure to be ruptured (10) have a longitudinal elastic modulus in excess of 20 000 MPa.

11. Device according to one of Claims 2 to 10, **characterized in that** the fibres that make up the structure to be ruptured (10) have a diameter of the order of 0.1 to 25 $\mu$m, or even of 0.1 to 10 $\mu$m.

12. Device according to one of Claims 2 to 11, **characterized in that** one of the stressing members comprises a punch (30) made of high-carbon steel.

13. Device according to one of Claims 2 to 12, **characterized in that** one of the stressing members comprises a punch (30) which defines a dihedron, the angle of which is between 30 and 90°, preferably of the order of 60°.

14. Device according to one of Claims 3 and 12 to 13, **characterized in that** the punch (30) has an edge (33), the maximum radius of curvature (r) of which is defined by the relationship

$$r = [(d/2)E]/\sigma$$

in which

   . $\sigma$ represents the maximum local extensile or compressive stress,
   . E represents the longitudinal elastic modulus, and

. d represents the diameter or thickness of the beam consisting of a fibre (10).

15. Device according to one of Claims 3 and 12 to 14, **characterized in that** the punch (30) has an edge (33), the radius of curvature (r) of which is at maximum of the order of 1 mm, preferably at maximum of the order of 0.75 mm.

16. Device according to one of Claims 2 to 15, **characterized in that** the length and the structure of the inflatable tube (60) are designed to mechanically decouple the pyrotechnic generator (50) and the punch (30) so as to avoid any transmission of vibration from the pyrotechnic generator (50) to the punch (30).

17. Device according to one of Claims 2 to 16, **characterized in that** the operating means (40) comprise a pyrotechnic generator (50) which has an electric initiator (56).

18. Device according to one of Claims 2 to 14, **characterized in that** the operating means (40) comprises a pyrotechnic generator (50) which has a charge (54) capable of generating a gas by combustion.

19. Device according to Claim 5, **characterized in that** the inflatable sealed member (60) is formed of a stainless steel tube.

20. Device according to either of Claims 5 and 19, **characterized in that** the inflatable sealed member (60) has a diameter of the order of 4 mm.

21. Device according to one of Claims 2 to 20, **characterized in that** the stressing means comprise a punch and retaining means (20) formed of an anvil and located one on each side of the structure to be ruptured (10).

22. Device according to Claim 21, **characterized in that** the anvil (20) is made of a material not as hard as the punch (30).

23. Device according to either of Claims 21 and 22, **characterized in that** the anvil (20) is made of medium-carbon steel.

24. Device according to either of Claims 21 and 22, **characterized in that** the anvil (20) is made based on elastomer or on a material exhibiting plastic behaviour, such as aluminium, copper or lead.

25. Device according to either of Claims 21 to 23, **characterized in that** the anvil (20) has a groove or hollow facing the punch (30).

26. Device according to one of Claims 2 to 25 taken in combination with Claim 3, **characterized in that** the retaining means (20) comprise two supports (22, 24) situated on the opposite side of the fibres (10) to the punch (30), the two supports (22, 24) being arranged one on each side of the edge (33) of the punch (30) in the longitudinal direction of the fibres (10).

27. Device according to Claim 26, **characterized in that** the distance separating the two supports (22, 24) is between one times, preferably two times, the diameter or thickness of the fibres (10) and the amplitude of relative displacement of the stressing means (20, 30).

28. Device according to one of Claims 2 to 27, **characterized in that** the stressing means (20, 30) are formed of two comb-shaped structures arranged one on each side of the fibres (10).

29. Device according to one of Claims 2 to 28, **characterized in that** it further comprises means (37, 38) designed to keep the stressing means, such as a punch (30), away from the structure to be ruptured (10) before the pyrotechnic generator (50) is operated.

30. Device according to Claim 29, **characterized in that** the temporary keeping means consist of silicone-elastomer strips (37, 38).

31. Device according to one of Claims 2 to 30, **characterized in that** the pyrotechnic generator (50) is designed to emit at least 1.5 1 of gas at one atmosphere.

**32.** Device according to one of Claims 1 to 31, **characterized in that** the element (150) working in compression is built in at one end into an element of complementary structure (100).

**33.** Device according to one of Claims 1 to 32, **characterized in that** it has an annular structure.

**34.** Device according to Claim 33, **characterized in that** the structure to be ruptured (10) is formed of a continuous annulus.

**35.** Device according to Claim 33, **characterized in that** the structure to be ruptured (10) is formed of several elements distributed about the axis O-O of the structure.

**36.** Device according to one of Claims 1 to 35, **characterized in that** the element (150) working in compression is formed integrally with one of the two support elements (100, 110).

**37.** Device according to one of Claims 1 to 36 taken in combination with Claim 3, **characterized in that** the element (150) working in compression also serves as retaining means (20).

**38.** Device according to one of Claims 1 to 36 taken in combination with Claim 3, **characterized in that** the element (150) working in compression also serves as a guide for the punch (30) and, as appropriate, for an inflatable tube (60) belonging to the operating means.

**39.** Device according to one of Claims 2 to 38, **characterized in that** the structure to be ruptured (10) is formed of a piece of composite material equipped with an additional thickness (12, 14) at least at one of its ends.

**40.** Device according to one of Claims 2 to 39, **characterized in that** the structure to be ruptured (10) can be split into several strands.

**41.** Device according to one of Claims 2 to 40, **characterized in that** the structure to be ruptured (10) is formed of a tubular structure.

**42.** Device according to one of Claims 2 to 41, **characterized in that** it comprises an ogee shape (70) placed between various strands of the structure to be ruptured (10).

**43.** Device according to Claim 42, **characterized in that** the ogee shape (70) carries at least one punch (30).

**44.** Device according to Claim 42, **characterized in that** the ogee shape (70) serves as retaining means.

**45.** Device according to one of Claims 42 to 44, **characterized in that** the ogee shape (70) carries a pyrotechnic generator (50).

**46.** Device according to one of Claims 42 to 45, **characterized in that** the ogee shape carries several punches (30).

**47.** Device according to one of Claims 2 to 46, **characterized in that** it comprises two punches (30) associated with respective pyrotechnic generators (50) facing each zone to be severed of the structure to be ruptured (10).

**48.** Device according to one of Claims 2 to 47, **characterized in that** it comprises at least two redundant rupture devices (20, 30, 40, 50) placed in parallel.

**49.** Device according to one of Claims 2 to 48, **characterized in that** at least certain elements (20, 30, 40, 50) of the rupture device are duplicated to guarantee the reliability of the assembly.

## FIG_1

## FIG_2

## FIG.3

## FIG.4

## FIG.5

## FIG.6

## FIG_7

## FIG_8

## FIG_9

## FIG_10

FIG_11

FIG_12

FIG_13

FIG.14

FIG.15

FIG.16